# EUROPEAN PATENT SPECIFICATION

(11) **EP 3 480 173 B1**
(45) Date of publication and mention of the grant of the patent: **04.12.2019**
(21) Application number: 18203632.7
(22) Date of filing: 31.10.2018
(51) Int. Cl.: C03B 33/06

(54) **METHOD AND DEVICE FOR SEPARATING A ROD-LIKE OR TUBULAR OBJECT MADE OF A BRITTLE MATERIAL**
VERFAHREN UND VORRICHTUNG ZUR TRENNUNG EINES STABFÖRMIGEN ODER ROHRFÖRMIGEN, AUS SPRÖDEM MATERIAL HERGESTELLTEN OBJEKTS
PROCÉDÉ ET DISPOSITIF DE SÉPARATION D'UN OBJET TUBULAIRE EN FORME DE TIGE OU CONSTITUÉ D'UN MATÉRIAU FRAGILE

(30) Priority: 01.11.2017 CZ 20170700
(43) Date of publication of application: 08.05.2019
(73) Proprietor: VÚTS, a.s., Liberec XI - Ruzodol I 460 01 Liberec (CZ)
(72) Inventor: Sidlof, Pavel, 460 14 Liberec (CZ); Braier, Zdenek, 460 10 Liberec (CZ)
(74) Representative: Musil, Dobroslav

(56) References cited:
- JP-A- H09 156 945
- KR-A- 20070 074 297

## Description

### Technical field

A method for separating a rod-like or tubular object made of a brittle material, particularly of glass, in which at first at least one circumferential notch is made on the surface of the object, and then the fixed object is acted on by a force impulse or impulses.

A device for separating a rod-like or tubular object made of a brittle material, particularly of glass, which comprises a cutting device for making circumferential notches on the object made of a brittle material and a means for applying force to the object provided with a surface circumferential notch.

### Background art

The labor input and productivity of large-series production of some types of beads, chatons and similar objects manufactured from tubes or rods made of a brittle material, particularly from glass tubes or small diameter rods, is primarily influenced by the requirement for the surface quality of their end faces formed by the separation process. Currently, for example, cutting is performed by chopping or breaking. The drawback is the poor quality of the fractured surface.

Document US 2436819 from 1944, which relates to the production of glass beads, describes a bundle of long glass tubes arranged closely parallel to one another. The air spaces between the tube surfaces are filled up with a water-soluble material which, when solidified, forms a solid body together with the tubes. It is then cut with a narrow abrasive disc into circular plates which are washed in water. This causes the solidified material to dissolve, whereupon the free beads are dried. The disadvantage is the relatively difficult operation of creating a rigid bundle of glass tubes and washing off the particles of adhesive material to clean the individual glass bodies. Moreover, this operation is difficult to automate. Furthermore, the diameter of the tube bundle requires a rigid disc, which is reflected in the thickness of the cutting means and hence in the great thickness of the cut. The surface of the tube cut will probably not be smooth enough without performing a further finishing operation.

Document DE102005054669A1 primarily deals with the cutting of glass panes. In the pane, a straight groove is cut by a cutting wheel, needle, or laser at the point where the pane is to be divided. An ultrasonic oscillator is brought into contact with the glass near the groove and is guided at a frequency of 20 to 30 kHz on the glass along the groove, thereby separating the glass at the groove. Alternatively, a method of dividing a glass tube into which a groove is previously formed is provided. The contact surface of the ultrasonic oscillator is then guided around the circumference of the tube in the groove region. However, this method is technically and economically unusable for dividing small diameter tubes, for example, in the production of glass beads.

Document JP9156945 relates to a method for separating a rod-like or tubular object made of glass by loading a side pressure along the outer periphery of a side pressure transmission cylinder, and cutting it along strip marks through a pressure medium filled into the transmission cylinder.

Document KR20070074297 A1 discloses a method of generating cavitation bubbles by applying ultrasonic generator to give impact caused by explosion of the bubbles to the scribed lines of the glass substrate.

The aim of the invention is therefore to eliminate the drawbacks of the background art and propose a solution which would be economical, especially for glass tubes of small diameters, and which would enable to produce the resulting elements formed by separation with the desired length and smooth surface of their end faces.

### Principle of the invention

The aim of the invention is achieved by a method for separating a rod-like or tubular object made of a brittle material, around the circumference of which at least one circumferential notch is made, whose principle consists in that in order to separate a part of the divided object, the surface area of the circumferential notch and/or its surroundings is brought into contact with an annulus of a main stream of a fluid which is put into a defined motion with a varying speed, wherein a change in the speed of the main stream of the fluid causes a local drop in the fluid pressure to form vacuum-filled cavities, whereupon after inducing a sudden increase in the fluid pressure, the implosion of these cavities follows, accompanied by a shock pressure wave in the fluid annulus, which causes the part of the tube to be separated in the weakened region of the circumferential notch.

Defined variations in the speed of the motion of the annulus of the main fluid stream in the circumferential direction of the object are achieved by varying the pressure of the fluid in the space of the lateral chambers connected to the annulus with the main stream of the fluid. This enables to induce implosion of the cavitation annulus at certain relative ratios of the chambers and the annulus with the main stream of the fluid only by a small pressure impulse in the space of the lateral chambers.

Defined variations in the speed of the motion of the annulus of the main fluid stream in the circumferential direction of the object are also achieved by its mechanical braking by means of an impeller which is in direct contact with the main stream of the fluid. This promotes uniform rotation of the water around the surface of the tube. Induction of the implosion of the cavitation annulus occurs as a result of sudden braking of the working fluid flow in the outlet branch. This increases the pressure while the impeller is braked and the centrifugal force decreases forming the cavitation annulus, which causes implosion and separation of the respective part of the tube.

The aim of the invention is also achieved by a device for dividing a rod-like or tubular object made of a brittle material, whose principle is that a means for applying force to a rod-like or tubular object is a circumferential cavitation chamber. Through the inner annular space of the cavitation chamber passes a main stream of a working fluid capable of forming a cavitation annulus in the region in which this surface area is provided with a circumferential notch, the inner annular space being defined by a part of the surface area of the divided rod-like or tubular object.

The annular space of the cavitation chamber is provided with at least one inlet and at least one outlet branch of the working fluid, whereby these branches are part of a hydraulic circuit, which further comprises a hydraulic pump, which allows the operation of the device to be controlled by regulated operation of the pump.

The annular space is formed by a main chamber of the cavitation chamber and two lateral chambers, whereby the main chamber is provided with at least one inlet branch and the lateral chambers are always provided with at least one outlet branch, the main chamber being connected to the adjacent side of the lateral chambers by circumferential radial gaps, the opposed sides of the lateral chambers forming the outer orifices for the passage of the divided rod-like or tubular object, whereby between the outer surface of the divided object and said outer orifices there is a circumferential radial gap. The mutual size of the flow cross-sections of these gaps allows the device to be controlled by only small pressure impulses in the space of the lateral chambers.

In view of controlling the pressure in the lateral chambers, it is advantageous if the circumferential radial gap between the main chamber and the lateral chamber forms a larger flow area than the circumferential radial gap between the outer surface of the divided object and the outer orifice for its passage into the cavitation chamber.

### Description of drawings

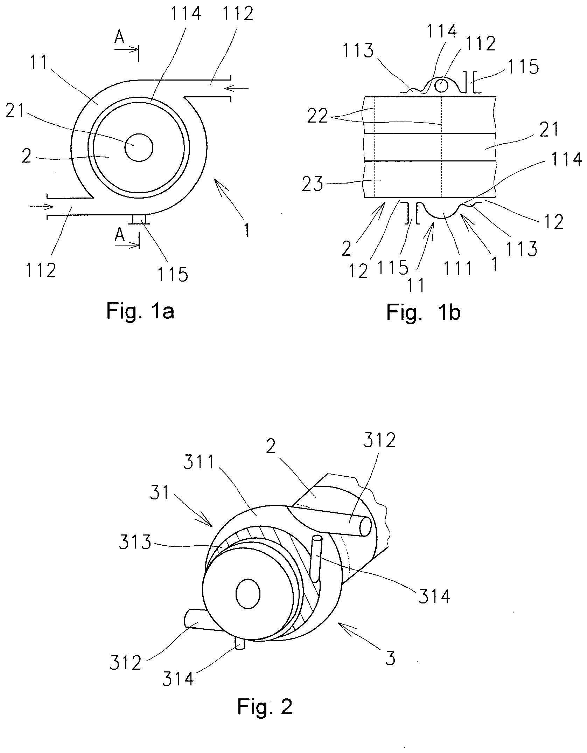

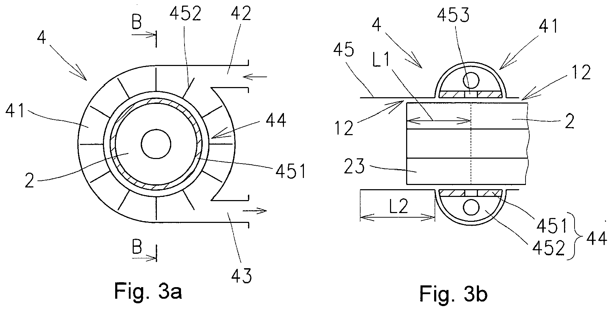

A part of the device according to the invention intended for the actual process of dividing a glass tube or rod (hereinafter, for the sake of simplicity, referred to only as "tube") is schematically represented in the drawing, wherein Fig. 1a shows a first exemplary embodiment of a cavitation chamber with an inserted tube in a sectional view taken along a plane perpendicular to the axis of the tube through the center of the cavitation chamber, Fig. 1b shows a sectional view A-A of Fig. 1a taken along the longitudinal axis of the tube, Fig. 2 is an oblique view of the cavitation chamber with an inserted tube, which is the second alternative of the first embodiment, Fig. 3a is the third exemplary embodiment of the cavitation chamber with an inserted tube shown in a sectional view taken along a plane perpendicular to the axis of the tube through the center of the cavitation chamber and Fig. 3b is a sectional view B-B of Fig. 3a taken along the longitudinal axis of the tube.

### Examples of embodiment

The device according to the invention for separating a tube made of a brittle material consists of two basic parts. The first part of the device which is not a subject-matter of the invention and is not shown comprises a cutting means, for example, a known device for disrupting the surface of the tube by making at least one circumferential notch in the outer surface of the tube. This is carried out by any of the known cutting tools, such as a cutting wheel, needle, laser, and the like. It is important for the notches to be spaced at the same mutual distances and to have the same shape, so that they will create the same weakening of the tube wall cross section.

Figs. 1a and 1b represent an active means of the second part of the device which serves to separate the part of the tube, the active means being a circumferential cavitation chamber **1**. It consists substantially of an annular space **11**, whose inner diameter is defined by the outer circumference of the tube **2** which has a cavity **21.** The tube **2** is inserted in the cavitation chamber **1** such that one circumferential notch **22** is located inside the cavitation chamber **1.** The distance between the end of the tube **2** and the adjacent notch **22**, or between two adjacent notches **22**, defines the length **L₁** of the part **23** of the tube **2**, which is hereinafter referred to as a "preform" **23.**

In the first exemplary embodiment shown in Figs. 1a, 1b the annular space **11** of the cavitation chamber **1** has three parts. In this exemplary embodiment, two inlet branches **112** (in another embodiment, for example, only one branch) of the working fluid, mutually offset by 180°, are connected tangentially to the annulus of the middle main chamber **111.** On both ends of the main chamber **111** annulus are arranged annular lateral chambers **113**, which are connected to the main chamber **111** around the entire circumference by a radial gap **114**. Between the outer edges of the lateral chambers **113** and the outer surface of the tube **2** there is a radial gap **12**, which is smaller than the radial gap **114** connecting the middle main chamber **111** to the annular lateral chambers **113.** Outlet branches **115** of the working fluid are connected to both lateral chambers **113.** Their direction is preferably also tangential in the direction of rotation. The radial gap **12** is as small as possible, whereby any small leaks of the working fluid are insignificant in terms of function.

The second exemplary embodiment shown in Fig. 2 is in principle a similar device to that shown in Figs. 1a, 1b. Its cavitation chamber **3** is formed by an annular space **31**, whose inner diameter is open. In this embodiment, like in the first embodiment, a glass tube **2** to be divided is inserted in the cavitation chamber **3**. In it, similarly to the first embodiment, a glass tube **2** to be divided is inserted. The outer circumference of the tube **2** having also minimum required radial clearance virtually closes the inner annular space **31** of the cavitation chamber **3**. The annulus of the main chamber **311** is joined tangentially also by one or two inlet branches **312** of the working fluid, which are mutually offset by 180°. In this embodiment, the main chamber **311** is connected around its entire circumference by means of a radial gap (not shown here) to a lateral chamber **313** disposed only on one side. The lateral chamber **313** is provided with two or more tangential outlet branches **314**, which can be connected to form one tube and introduced into a suction port of an unillustrated pump of the working fluid.

The cavitation chamber **4,** according to the third exemplary embodiment shown in Figs. 3a, 3b, has only one annular space **41.** An inlet branch **42** and an outlet branch **43** are tangentially connected thereto. In this exemplary embodiment, the axis of the outlet branch **43** is parallel to the axis of the inlet branch **42.** In the annular space is mounted in an unillustrated manner a rotatable impeller **44** formed by a hub **451**, to which radial blades **452** are attached. In the annulus of the hub **451** of the impeller **44** in the region of the notch **22**, that is, approximately in the middle of the length of the hub **451**, there is a continuous circumferential gap **453** which allows free formation of a cavity in the region of the notch **22.** Both halves of the hub **451** annulus remain connected by means of the blades **452** attached to them. The circulation of the working fluid in the cavitation chamber **4** is provided by an unillustrated pump connected by its discharge port to the inlet branch **42** and by the suction port to the outlet branch **43.**

Figure 3b shows an extended conduit **45** of the edge of an orifice for ejecting the preform **23** separated from the end of the tube **2.** The extended conduit **45** can be also included in the previous two embodiments of the cavitation chambers **1**, **3.** The extended conduit **45** preferably has a length L2 approximately corresponding to the length L1 of the preform **23.** After separating the preform **23** and after moving the tube **2** to carry out a further separation operation, the already separated preform **23** in the extended conduit **45** prevents large outflow losses of the working fluid from the cavitation chamber **1**, **3**, **4.**

Water is usually used as a working fluid.

The function of the device for dividing particularly elongated tubes or rods made of a brittle material is based on the utilization of cavitation. Cavitation occurs in a well-known manner in a fluid where the pressure decreases below the saturated vapor pressure of this fluid, causing the formation of cavities in which vacuum is formed. With a sharp rise in the working fluid pressure, such "bubbles" collapse, the voids implode, which is accompanied by a very high local increase in the pressure and usually also by an increase in the temperature. Implosion is accompanied by a shock wave in the fluid in the annular space **11**, **31**, **41** of the cavitation chamber **1**, **3**, **4.**

In the first embodiment of the cavitation chamber **1,** the working fluid is fed into both inlet branches **112** of the annular space **11** and flows at such a circumferential speed that a cavitation annulus is formed by the centrifugal force around the region of the circumferential notch **22** formed in the surface of the glass tube **2.** The incoming water flows through the radial gaps **114** into both lateral chambers **113.** The cross-sectional area of the radial gap **114** is larger than that of the radial gap **12** between the outer surface of the tube **2** and the orifice of the annular space **11** of the cavitation chamber **1***,* in which the glass tube **2** is inserted. Therefore, a small pressure impulse in the space of the lateral chambers **113** can cause the implosion of the cavitation annulus. The shock wave produced causes the glass tube **2** to be divided in the cross-section weakened by the circumferential notch **22.** The pressure impulse in the lateral chambers **113** is induced by a short closure or throttling of the outlet branches **115.**

Similarly, implosion of the cavitation annulus is induced also in the second embodiment of the cavitation chamber **3.** In this case, it is performed by briefly closing or throttling the outlet branches **314** of the lateral chamber **313.**

The method of inducing implosion in the third embodiment of the cavitation chamber according to the invention is different from the first two embodiments. The working fluid is fed into the annular space **41** of the cavitation chamber **4** tangentially through the inlet branch **112** and is discharged through the outlet branch **43.** The flowing working fluid drives the impeller **44** which facilitates uniform rotation of the water around the surface of the glass tube **2.** Implosion of the cavitation annulus is in this case carried out by a sudden braking of the working fluid stream in the outlet branch **43**, thereby increasing the pressure in the cavitation chamber **4**, while simultaneously slowing down the impeller **44**. This causes a decrease in the centrifugal force which generates the cavitation annulus and, together with the above-mentioned pressure increase in the cavitation chamber **4**, implosion and separation of the preform **23** are induced. Fluid is continuously added to the circuit to make up for leakage of the working fluid from the substantially closed circuit of the working fluid due to structural leaks, including possible fluid losses as a result of the short opening of the cavitation chamber **1**, **3**, **4** when the separated preform **23** is removed from the cavitation chamber not provided with the extended conduit **4**. The entire device may be immersed in a tank with the working fluid, to prevent the system from being aerated.

Dividing the tubes by means of the cavitation chamber according to the invention is advantageous in terms of low energy intensity and low buying costs. The cavitation chamber can be made with 3D printed plastic. There is no need for perfect sealing of the chamber with the inserted tube, so it is possible to divide tubes exhibiting shape imperfection, for example, tubes with a certain ovality of the surface or deflection. It is conceivable to arrange a closed fluid circuit with a metering pump and a fluid cleaner, for example, even with several cavitation chambers connected in parallel.

### List of references

- 1: cavitation chamber (first embodiment)
- 11: the annular space (of the cavitation chamber)
- 12: the radial gap (between the orifice of the cavitation chamber for the glass tube and the outer surface of the glass tube)
- 111: the main chamber (of the cavitation chamber)
- 112: inlet branch (of the cavitation chamber)
- 113: lateral chamber (of the cavitation chamber)
- 114: the radial gap (between the main chamber a lateral chamber)
- 115: outlet branch (of the lateral chamber)
- 2: glass tube
- 21: cavity (of the glass tube)
- 22: notch (in the glass tube)
- 23: preform
- 3: cavitation chamber (second embodiment)
- 31: inner annular space (of the cavitation chamber)
- 311: annulus of the main chamber
- 312: inlet branch
- 313: lateral chamber
- 314: outlet branch (of the lateral chamber)
- 4: cavitation chamber (third embodiment)
- 41: annular space (of the cavitation chamber)
- 42: inlet channel
- 43: outlet channel
- 44: impeller
- 45: extended conduit (for ejecting the separated part of the tube)
- 451: hub (of the impeller)
- 452: radial blade
- 453: circumferential gap in the hub (in the middle of its length)
- L₁: length of the preform
- L₂: length of the extended conduit

## Claims

1. A method for separating a rod-like or tubular object made of a brittle material, especially of glass, in which at first at least one circumferential notch (22) is made on the surface of the object at a predetermined point, whereupon a force impulse or impulses is/are applied to the fixed object, **characterized in that** in order to separate a part of the divided object, the surface of the circumferential notch (22) and/or its surroundings is brought into contact with an annulus (11, 31, 41) of a main stream of a fluid which is put into a defined variable speed motion, whereby a change in the speed of the main fluid stream causes a local drop in the pressure of the fluid to form vacuum-filled cavities, and after inducing a sudden increase in the pressure of the fluid, implosion of these cavities occurs, accompanied by a shock pressure wave in the fluid annulus (11, 31, 41), which causes separation of the part of the tube in the region weakened by the circumferential notch (22).

2. The method for separating a rod-like or tubular object according to claim 1, **characterized in that** defined changes in the speed of the motion of the annulus (11, 31) the main stream of the fluid in the circumferential direction of the object are achieved by the changes in the fluid pressure in the space of the lateral chambers (113, 313) connected to the annulus (11, 31) with the main stream of the fluid.

3. The method for separating a rod-like or tubular object according to claim 1, **characterized in that** defined changes in the speed of the motion of the annulus (41) with the main stream of the fluid in the circumferential direction of the object are achieved by mechanical braking by means of an impeller (44), which is in direct contact with the main stream of the fluid.

4. A device for separating a rod-like or tubular object made of a brittle material, especially of glass, which comprises a means for force acting on the object provided with a surface circumferential notch (22), **characterized in that** the means for force acting on the rod-like or tubular object is a circumferential cavitation chamber (1, 3, 4), and through the inner annular space (11, 41) of the cavitation chamber (1, 2, 3) defined by a part of the surface area of the divided rod-like or tubular object passes the main stream of the working fluid in the area in which the surface area is provided with the circumferential notch (22), whereby the main stream of the working fluid forms the actual cavitation annulus.

5. The device for separating a rod-like or tubular object according to claim 4, **characterized in that** the annular space (11, 31, 41) of the cavitation chamber is provided with at least one inlet branch (112, 312, 42) of the working fluid and at least one outlet branch (115, 314, 43) of the working fluid, whereby these branches (112, 312, 42, 115, 314, 43) are part of a closed hydraulic circuit which further comprises a hydraulic pump.

6. The device for separating a rod-like or tubular object according to claim 4 or 5, **characterized in that** the annular space (11) consists of the main chamber (111) of the cavitation chamber (1) and two lateral chambers (113), whereby the main chamber (111) is always provided with at least one inlet branch (112) and the lateral chambers (113) are always provided with at least one outlet branch (115), the main chamber (111) being connected to the adjacent side of the lateral chambers (113) by circumferential radial gaps (114), the opposed sides of the lateral chambers (113) forming outer orifices for the passage of the divided rod-like or tubular object, whereby between the outer surface of the object to be divided and the outer orifices there is a circumferential radial gap (12).

7. The device for separating a rod-like or tubular object according to claim 6, **characterized in that** the circumferential radial gap (114) between the main chamber (111) and the lateral chamber (113) constitutes a larger flow area than the circumferential radial gap (12) between the outer surface of the divided object and the outer orifice for its passage to the cavitation chamber (1).

## Patentansprüche

1. Verfahren zur Teilung eines stab- oder rohrförmigen Gegenstandes, der aus einem zerbrechlichen Material, insbesondere aus Glas, gebildet wird, bei dem auf der Oberfläche des Gegenstandes zuerst in bestimmter Stelle mindestens ein Umfangsritz (22) gebildet wird, wonach auf den befestigten Gegenstand mit einem Kraftimpuls oder Kraftimpulsen gewirkt wird, **dadurch gekennzeichnet, dass** zur Teilung des Teils des zu teilenden Gegenstandes die Oberflächenfläche des Umfangsritzes (22) und/oder seiner Umgebung in Kontakt mit dem Ring (11, 31, 41) des Hauptstromes der Flüssigkeit gebracht wird, die in die definierte Bewegung mit einer variablen Geschwindigkeit gebracht wird, wobei mit der Änderung der Geschwindigkeit des Hauptstromes der Flüssigkeit eine lokale Senkung des Flüssigkeitsdrucks unter der Entstehung der mit Vakuum gefüllten Hohlräume hervorgerufen wird, wonach nach dem Hervorrufen der plötzlichen Erhöhung des Flüssigkeitsdruckes zur Implosion von diesen Hohlräumen kommt, die von einer Druckstoßwelle im Ring (11, 31, 41) der Flüssigkeit begleitet wird, die die Teilung des Teiles des Rohres in der Stelle seiner Abschwächung durch den Umgangsritz (22) hervorruft.

2. Verfahren zur Teilung des stab- oder rohrförmigen Gegenstandes nach dem Anspruch 1, **dadurch gekennzeichnet, dass** die definierten Änderungen der Geschwindigkeit der Bewegung des Ringes (11, 31) des Hauptstromes der Flüssigkeit in der Umfangsrichtung des Gegenstandes durch die Änderungen des Flüssigkeitsdruckes im Raum der seitlichen Kammern (113, 313) erreicht werden, der mit dem Ring (11, 31) mit dem Hauptstrom der Flüssigkeit verkoppelt ist.

3. Verfahren zur Teilung des stab- oder rohrförmigen Gegenstandes nach dem Anspruch 1, **dadurch gekennzeichnet, dass** die definierten Änderungen der Geschwindigkeit der Bewegung des Ringes (41) des Hauptstromes der Flüssigkeit in der Umfangsrichtung des Gegenstandes durch mechanisches Bremsen mittels einer Umlaufrolle (44) erreicht werden, die mit dem Hauptstrom der Flüssigkeit im direkten Kontakt steht.

4. Einrichtung zur Teilung des stab- oder rohrförmigen Gegenstandes, der aus einem zerbrechlichen Material, insbesondere aus Glas, gebildet wird, die das Mittel zur Kraftwirkung auf den den Oberflächenumfangsritz (22) aufweisenden Gegenstand aufweist, **dadurch gekennzeichnet, dass** das Mittel zur Kraftwirkung auf den stab- oder rohrförmigen Gegenstand eine Umfangskavitationskammer (1, 3, 4) ist, in deren innerem ringförmigem Raum (11, 41), der durch den Teil der Oberflächenfläche des zu teilenden stab- oder rohrförmigen Gegenstandes in dem Bereich definiert ist, in dem diese Oberflächenfläche den Umfangsritz (22) aufweist, der Hauptstrom der Arbeitsflüssigkeit durchgeht, der den eigenen Kavitationsring bildet.

5. Einrichtung zur Teilung des stab- oder rohrförmigen Gegenstandes nach dem Anspruch 4, **dadurch gekennzeichnet, dass** der ringförmige Raum (11, 31, 41) der Kavitationskammer mindestens einen Eingangsstutzen (112, 312, 42) der Arbeitsflüssigkeit und mindestens einen Ausgangsstutzen (115, 314, 43) der Arbeitsflüssigkeit aufweist, wobei diese Stutzen (112, 312, 42, 115, 314, 43) Bestandteil des geschlossenen hydraulischen Kreises sind, der ferner eine hydraulische Pumpe aufweist.

6. Einrichtung zur Teilung des stab- oder rohrförmigen Gegenstandes nach dem Anspruch 4 oder 5, **dadurch gekennzeichnet, dass** der ringförmige Raum (11) durch eine Hauptkammer (111) der Kavitationskammer (1) und zwei seitliche Kammern (113) gebildet wird, wobei die Hauptkammer (111) mindestens einen Eingangsstutzen (112) aufweist und die seitlichen Kammern (113) jeweils mindestens einen Ausgangsstutzen (115) aufweisen, wobei die Hauptkammer (111) mit der ihr anliegenden Seite der seitlichen Kammern (113) durch Umfangsradialspalte (114) verbunden ist, wobei die gegenüberliegenden Seiten der seitlichen Kammern (113) die Außenöffnungen für den Durchgang des zu teilenden stab- oder rohrförmigen Gegenstandes bilden, wobei zwischen der Außenoberfläche des zu teilenden Gegenstandes und den genannten Außenöffnungen ein Umfangsradialspalt (12) liegt.

7. Einrichtung zur Teilung des stab- oder rohrförmigen Gegenstandes nach dem Anspruch 6, **dadurch gekennzeichnet, dass** der Umfangsradialspalt (114) zwischen der Hauptkammer (111) und der seitlichen Kammer (113) eine Durchflussfläche größer als Umfangsradialspalt (12) zwischen der Außenoberfläche des zu teilenden Gegenstandes und der Außenöffnung für seinen Durchgang in die Kavitationskammer (1) bildet.

## Revendications

1. Procédé de division d'un objet en forme de tige ou tubulaire formé d'un matériau fragile, en particulier du verre, dans lequel au moins une encoche circonférentielle (22) est d'abord formée sur la surface de l'objet à un emplacement désigné, après quoi l'objet fixé est soumis à une impulsion de force ou à des impulsions, **caractérisé en ce que,** pour séparer une partie de l'objet découpé, la surface de l'encoche circonférentielle (22) et/ou son environnement sont amenés au contact avec l'anneau (11, 31, 41) du courant principal du fluide, qui se déplace dans un mouvement défini de vitesse variable, tandis qu'avec le changement de la vitesse du courant principal du fluide il provoque une chute locale de la pression du fluide en formant des petits tubes remplis sous vide, après quoi après une augmentation soudaine de la pression du fluide il entraîne l'implosion de ces petits tubes, qui s'accompagne d'une onde de pression de choc dans l'anneau (11, 31, 41) du fluide, ce qui provoque le découpage de la partie du petit tube au point d'affaiblissement par l'encoche circonférentielle (22).

2. Procédé de division d'un objet en forme de tige ou tubulaire selon la revendication 1, **caractérisé en ce que** les modifications définies de la vitesse de déplacement de l'anneau (11, 31) du courant principal du fluide dans la direction circonférentielle de l'objet sont obtenues en faisant varier la pression du fluide dans l'espace des petites chambres latérales (113, 313) connectées par l'anneau (11, 31) avec le courant principal du fluide.

3. Procédé de division d'un objet en forme de tige ou tubulaire selon la revendication 1, **caractérisé en ce que** les variations définies de la vitesse du déplacement de l'anneau (41) du courant principal du fluide dans la direction circonférentielle de l'objet sont obtenues par le freinage mécanique par la petite roue en circulation (44) qui est en contact direct avec le courant principal du fluide.

4. Dispositif pour diviser un objet en forme de tige ou tubulaire formé d'un matériau fragile, en particulier du verre, qui comprend le moyen pour exercer la force sur l'objet pourvu d'une encoche circonférentielle sur sa surface (22), **caractérisé en ce que** le moyen pour exercer la force sur l'objet en forme de tige ou tubulaire est une chambre de cavitation circonférentielle (1, 3, 4), dans son espace annulaire intérieur (11, 41) délimité par une partie de la surface de l'objet en forme de tige ou tubulaire divisé dans la région, où cette surface est pourvue d'une encoche circonférentielle (22), il est traversé par le courant principal du fluide de travail qui forme son propre anneau de cavitation.

5. Dispositif pour diviser un objet en forme de tige ou tubulaire selon la revendication 4, **caractérisé en ce que** l'espace annulaire (11, 31, 41) de la chambre de cavitation est pourvu au moins d'une entrée du fluide de travail (112, 312, 42) et au moins d'une buse de sortie (115, 31, 41). 314, 43) du fluide de travail, tandis que ces tubulures (112, 312, 42, 115, 314, 43) font partie d'un circuit hydraulique fermé, comprenant en outre une pompe hydraulique.

6. Dispositif pour diviser un objet en forme de tige ou tubulaire selon la revendication 4 ou 5, **caractérisé en ce que** l'espace annulaire (11) est formé par une chambre principale (111) de la chambre de cavitation (1) et deux petites chambres latérales (113), tandis que la chambre principale (111) est munie au moins d'une gorge d'entrée (112) et les petites chambres latérales (113) sont chacune munies au moins d'une gorge de sortie (115), tandis que la chambre principale (111) est reliée avec le côté adjacent des petites chambres latérales (113) par des intervalles radiaux circonférentiels (114), tandis que les côtés opposés des petites chambres latérales (113) forment des ouvertures extérieures pour le passage de l'objet en forme de tige ou tubulaire divisé, tandis qu' entre la surface extérieure de la pièce et lesdites ouvertures extérieures il y a un espace radial circonférentiel (12).

7. Dispositif pour diviser un objet en forme de tige ou tubulaire selon la revendication 6, **caractérisé en ce que** l'espace radial circonférentiel (114) entre la chambre principale (111) et la petite chambre latérale (113) forment une zone d'écoulement plus grande que l'espace radial circonférentiel (12) entre la surface extérieure de l'objet divisé et une ouverture extérieure pour le faire passer dans la chambre de cavitation (1).
